# EUROPEAN PATENT SPECIFICATION

(11) **EP 0 366 473 B1**
(45) Date of publication and mention of the grant of the patent: **18.05.1994**
(21) Application number: 89311077.5
(22) Date of filing: 26.10.1989
(51) Int. Cl.: H01B 7/28, H01B 7/34

(54) **Electric cables**
Elektrische Kabel
Câbles électriques

(30) Priority: 27.10.1988 GB 8825143
(43) Date of publication of application: 02.05.1990
(73) Proprietor: BICC Public Limited Company, London W1X 5FH (GB)
(72) Inventor: Roberts, David Geraint, Froncysyllte Llangollen Clwyd LL20 7RH (GB)
(74) Representative: Poole, Michael John

(56) References cited:
- EP-A- 0 175 419
- EP-A- 0 209 899
- EP-A- 0 276 974
- DE-A- 2 526 138
- FR-A- 2 278 139
- FR-A- 2 496 964
- GB-A- 2 170 646
- US-A- 3 681 515
- CHEMICAL ABSTRACTS, vol. 104, no. 14, April 1986, page 747, abstract no. 120997t, Columbus, Ohio, US; & JP-A-60 187 547 (SUMITOMO ELECTRIC INDUSTRIES, LTD) 25-09-2985
- Polymer Science Dictionary, Alger, M.S.M., publ. Elsevier A. Sci. London, 1989

## Description

This invention relates to electric cables for service in moist conditions where precautions need to be taken in respect of the possibility of fire occuring. It is more especially, but not exclusively, concerned with power cables for medium voltages, say from around 1kV to 66kV.

It is estimated, for example, that the ambient conditions in the running tunnels of the Channel Tunnel currently under construction will include temperatures around 30°C (and consequently cable sheath temperatures as high as 70°C) and relative humidities as high as 95%; and public safety demands cables that will not contribute substantially to toxic hazard or smoke obscuration in case of fire and will continue to function under fire conditions for long enough to serve evacuation procedures. These characteristics need to be achieved without compromising the service life of the cable, which purchasers expect to be in excess of 30 years.

Current "low smoke and fume" cables reasonably satisfy the fire safety requirements but cannot be relied on to meet the voltage withstand requirements for medium voltage power cables after prolonged exposure to high humidity, especially at elevated temperature, since they rely on hydrated inorganic compounds such as alumina trihydrate or magnesium hydroxide as flame retardant filler and while this has many advantages it does inevitably have some tendency to promote penetration of water in amounts that may lead to electrical breakdown.

EP 0175419 discloses an electric cable comprising a core comprising at least one insulated metallic conductor; an inner sheathing layer based on polyethylene with a density of not less than 0.938, an intermediate sheathing layer of a flexible metal tape that does not melt below 1000°C, and an outer sheathing layer but this cable has other essential solid layers between the intermediate and outer sheathing layers and is designed for chemical resistance, not for fire performance.

The use of copper tapes for electrical shielding is well-known, as illustrated by US 3681515; EP 0248800A illustrates the use of low-smoke-and-fume outer sheaths; and EP 0276974A discloses a cable with a clearance between sheathing layers for the purpose of increasing flexibility, the radial dimension of such clearance being about 1-4% of the radius.

The present invention provides an electric cable with improved fire-survival performance comprising: a core comprising at least one insulated metallic conductor; an inner sheathing layer based on polyethylene with a density of not less than 0.938; an intermediate sheathing layer of a flexible metal tape that does not melt below 1000°C; and an outer sheathing layer **characterised by the combination of features** **(individually known *per se*)** that the metal tape is of copper; that the outer sheathing layer is of a halogen-free low-smoke-and-fume polymer-based composition; and that the outer sheathing layer is separated from the metal tape only by a clearance the radial dimension of which is in the range from 0.02mm to 1mm or 1% of the diameter of the intermediate layer, whichever is greater.

Medium density polyethylenes are preferred.

The conductor is preferably of stranded or solid copper, but could be of aluminium or other suitable metal. Its insulation will normally be of polymer-based material and is preferably halogen-free, though this is not essential in view of the good fire protection afforded to it by the composite sheath. Crosslinked polyethylene is preferred, but alternatives such as ethylene-propylene co- and ter-polymers, ethylene/vinyl acetate copolymers and silicone rubbers could be used. The core may also comprise a conductor screen and/or a dielectric screen of "semiconducting" material as appropriate to the service voltage of the cable.

The inner sheathing layer provides the main waterproofing element, and coventional cable-sheathing compositions based on medium- or high-density grades of polyethylene can be used. If desired, the inner layer could be crosslinked by the silane crosslinking ("Sioplas") process, by irradiation or if the nature of the core allows by the conventional peroxide process.

The intermediate layer contributes to fire performance by tending to preserve physical integrity even when the inner layer softens or degrades. It also delays softening or degradation by acting as a heat sink.

The outer sheathing layer may be of any suitable halogen-free low-smoke-and-fume sheathing composition, either thermoplastic or crosslinked.

Preferably the outer sheathing layer is applied by extrusion at finished size, as distinct from being extruded oversize and drawn down onto the underlying intermediate layer, as the latter technique may produce a sheath with residual stresses that have a harmful effect on fire performance.

### EXAMPLE

A single-core power cable rated at 25/44kV has a 300mm² stranded copper conductor nominally 20.9mm in diameter, to which is applied a conventional conductor screen 0.8mm thick, conventional crosslinked polyethylene insulation with a radial thickness of 12.3mm and a conventional dielectric screen with a nominal thickness of 1.0mm (nominal diameter 49.7mm). Two 50mm nonwoven polyester tapes (Firet 3C310) were then applied with left-hand lay, each tape nominally butted without overlap and the outer tape applied centrally over the butt gap of the first to form a bedding for an outer concentric conductor made up of 58 round copper wires each 2.6mm in diameter applied with a right-hand lay of about 750mm, completing a core with a nominal diameter of 56.9mm.

Over this core, in accordance with the invention is applied a three layer sheath as follows:

The inner sheathing layer has a radial thickness of 1.7mm and is made of the medium-density polyethylene compound sold by Neste under the designation DGDS 3420; this compound is suitable for use in contact with copper and is known to have good electrical properties even after long exposure to water. Extrusion conditions are such that no penetration of the compound between the wires occurs.

The intermediate sheathing layer consists of a single copper tape, 0.1mm thick and 50mm wide applied with right hand lay and with an overlap of 50% (so that there are two thicknesses of tape except between the nominally abutted tape edges). There is no adhesion to the inner sheathing layer and as the tape edges are not seamed the tape offers no significant resistance to water penetration in the long term.

The outer sheathing layer is 2.8mm in radial thickness and is made of a low-smoke-and-fume composition comprising, in parts by weight:

| ingredient | parts |
|---|---|
| alumina trihydrate (specific area 7m²/g) | 200 |
| low density polyethylene (MFI 2) | 40 |
| ethylene-propylene terpolymer (Mooney Viscosity ML 1+4=54±5) (Exxon Vistalon 3708) | 30 |
| ethylene-propylene terpolymer (Mooney Viscosity ML 1+4=26±5) (Exxon Vistalon 2504) | 30 |
| aliphatic crystalline resin processing aid (Exxon Escorez 1202B) | 20 |
| antioxidant (Flectol H) | 2 |

This example cable easily meets the requirements of the vertical fire test according to BS 4066 Pt3 in the class for a non-metallic volume of 7 litres per metre length; examination of the cable after exposure in this test showed no damage to the inner sheathing layer except minor melting deformation. An Aₒ value of less than 1.5 was obtained for a 3m cube fire test following the procedure of Appendix F of BS 6724:1986. The sheath withstood the standard 3kV voltage test for cables of this voltage rating even after prolonged exposure to high ambient humidity conditions.

## Claims

1. An electric cable with improved fire-survival performance comprising: a core comprising at least one insulated metallic conductor; an inner sheathing layer based on polyethylene with a density of not less than 0.938; an intermediate sheathing layer of a flexible metal tape that does not melt below 1000°C; and an outer sheathing layer **characterised by the combination of features (individually known** *per se***)** that the metal tape is of copper; that the outer sheathing layer is of a halogen-free low-smoke-and-fume polymer-based composition; and that the outer sheathing layer is separated from the metal tape only by a clearance the radial dimension of which is in the range from 0.02mm to 1mm or 1% of the diameter of the intermediate layer, whichever is greater.

2. A cable as claimed in claim 1 in which the said polyethylene is of medium density.

3. A cable as claimed in claim 1 or claim 2 in which the conductor insulation is polymer-based and is halogen-free.

4. A cable as claimed in claim 3 in which the conductor insulation is of crosslinked polyethylene.

5. A cable as claimed in any one of the preceding claims in which the inner sheathing layer is based on a crystalline polyethylene.

6. A cable as claimed in any one of the preceding claims in which the said clearance is about 0.1mm.

## Patentansprüche

1. Elektrisches Kabel mit verbesserter Leistungsfähigkeit beim Überstehen von Feuer mit: einem Kern mit mindestens einem isolierten metallischen Leiter, einer inneren Mantelschicht auf der Grundlage von Polyethylen mit einer Dichte von mindestens 0.938; einer Zwischenmantelschicht aus einem flexiblen Metallband, welches nicht unterhalb 1000°C schmilzt; und einer äußeren Mantelschicht, gekennzeichnet durch die Kombination der (einzeln *per se* bekannten) Merkmale, daß das Metallband aus Kupfer besteht; daß die äußere Mantelschicht aus einer halogenfreien Zusammensetzung auf Polymerbasis mit niedriger Rauch- und Qualmentwicklung besteht; und daß die äußere Mantelschicht von dem Metallband nur durch einen Zwischenraum getrennt ist, dessen radiale Abmessung im Bereich von 0.02 mm bis 1 mm bzw. bis 1 % des Durchmessers der Zwischenschicht beträgt, je nachdem, was größer ist.

2. Kabel gemäß Anspruch 1, wobei das Polyethylen eine mittlere Dichte aufweist.

3. Kabel gemäß Anspruch 1 oder Anspruch 2, wobei die Leiterisolierung auf Polymerbasis aufgebaut und halogenfrei ist.

4. Kabel gemäß Anspruch 3, wobei die Leiterisolierung aus vernetztem Polyethylen besteht.

5. Kabel gemäß einem der vorhergehenden Ansprüche, wobei die innere Mantelschicht auf Basis eines kristallinen Polyethylens aufgebaut ist.

6. Kabel gemäß einem der vorhergehenden Ansprüche, wobei der Zwischenraum etwa 0.1 mm beträgt.

## Revendications

1. Câble électrique présentant une meilleure performance à résister au feu, comprenant : une âme comprenant au moins un conducteur métallique isolé; une couche de gainage intérieure à base de polyéthylène ayant une densité qui n'est pas inférieure à 0,938; une couche de gainage intermédiaire d'un ruban métallique flexible qui ne fond pas en-dessous de 1000°C; et une couche de gainage extérieure, caractérisé par la combinaison des caractéristiques (connues individuellement en soi) selon lesquelles le ruban métallique est du cuivre; la couche de gainage extérieure est une composition à base de polymère exempt d'halogène et à faible dégagement de fumée et de vapeur; et la couche de gainage extérieure est séparée du ruban métallique uniquement par un espace libre dont la dimension radiale est comprise entre 0,02 mm et 1 mm ou bien représente 1% du diamètre de la couche intérieure, selon ce qui est le plus grand.

2. Câble selon la revendication 1, dans lequel le polyéthylène est de densité moyenne.

3. Câble selon la revendication 1 ou la revendication 2, dans lequel l'isolant du conducteur est à base de polymère et est exempt d'halogène.

4. Câble selon la revendication 3, dans lequel l'isolant du conducteur est du polyéthylène réticulé.

5. Câble selon l'une quelconque des revendications précédentes, dans lequel la couche de gainage intérieure est à base de polyéthylène cristallin.

6. Câble selon l'une quelconque des revendications précédentes, dans lequel ledit espace libre est d'environ 0,1 mm.
